# EUROPEAN PATENT SPECIFICATION

(11) **EP 1 312 837 B1**
(45) Date of publication and mention of the grant of the patent: **10.09.2008**
(21) Application number: 02025243.3
(22) Date of filing: 12.11.2002
(51) Int. Cl.: F16H 61/02

(54) **Shift control apparatus and method of transmission for vehicle**
Vorrichtung und Verfahren zum Schalten eines Wechselgetriebes eines Fahrzeuges
Dispositif et procédé de changement de vitesse pour transmission de véhicule

(30) Priority: 15.11.2001 JP 2001350552
(43) Date of publication of application: 21.05.2003
(73) Proprietor: Toyota Jidosha Kabushiki Kaisha, Toyota-shi, Aichi-ken, 471-8571 (JP)
(72) Inventor: Yamamoto, Kazuhiro, Toyota-shi, Aichi-ken, 471-8571 (JP); Ogawa, Shinji, Toyota-shi, Aichi-ken, 471-8571 (JP); Naito, Koji, Toyota-shi, Aichi-ken, 471-8571 (JP); Amano, Takaya, Toyota-shi, Aichi-ken, 471-8571 (JP)
(74) Representative: TBK-Patent

(56) References cited:
- EP-A1- 0 595 518
- WO-A-97/48923
- DE-A1- 4 446 058
- DE-A1- 19 839 837
- JP-A- 3 089 069
- US-A- 4 845 621

## Description

### BACKGROUND OF THE INVENTION

### 1. Field of Invention

The invention relates to a shift control apparatus and a shift control method of a transmission capable of automatic shifting. More particularly, the invention relates to a technology that allows downshifting to an emergency low speed gear stage for obtaining the gear ratio greater than that of the lowest speed gear stage among a plurality of gear stages normally used for the automatic shifting. This makes it possible to prevent insufficiency in the driving force of the vehicle.

### 2. Description of Related Art

There is a known transmission capable of automatic shifting. For example, there is a parallel bi-axial type constant-mesh manual transmission which is capable of automatic shifting using a shift actuator such as a hydraulic cylinder. There is an automatic transmission which is capable of automatic shifting using a shift actuator for selectively engaging elements of multiple sets of planetary gear devices. There is a belt-type continuously variable transmission having a manual shift mode in which gear stages with multiple gear ratios are selectively established in accordance with a command from a manual shift operation switch.

The gear ratios of multiple gear stages normally used in the automatic shifting of a vehicle with a transmission capable of automatic shifting may be set so as to satisfy two contradicting requirements, that is, the driving force and the fuel efficiency. More specifically, the gear ratio is set to obtain a driving force sufficient for the vehicle to run on an uphill or sufficient for the vehicle to achieve acceleration upon taking off while keeping high fuel efficiency. In order to satisfy one of the above contradicting requirements, the other requirement is likely to be sacrificed. If the gear ratio of the lowest gear stage is decreased, the driving force of the vehicle running on the flat road becomes sufficient while the fuel efficiency is improved. At the aforementioned gear ratio, it is difficult for the vehicle to run on the uphill and to achieve acceleration sufficient to take off. Meanwhile, if the gear ratio of the lowest gear stage is increased so as to obtain the driving force sufficient for the vehicle to run on the uphill or to achieve acceleration sufficient to take off, the fuel efficiency of the vehicle running on the flat road may be deteriorated.

There is disclosed a shift control apparatus of a vehicular automatic transmission provided with an extra low range. In the above shift control apparatus, if the extra low range is selected, shifting is performed within a transmission range including the extra low speed gear stage, which is different from that of the range normally used. For example, Japanese Patent Application Laid-Open No. 3-89069, considered as closest prior art, discloses the shift control apparatus as aforementioned. When the vehicle is running on the uphill or takes off in the acceleration state, the extra low range is selected so as to obtain the required driving force. Meanwhile, when the vehicle is running in a normal condition, the D range is selected so as to improve the fuel efficiency.

In the aforementioned shift control apparatus, however, a driver needs to select the D range or the extra low range using a shift lever depending on the running state of the vehicle. Since it cannot be expected that an unskilled driver performs the shift operation appropriately using the shift lever depending on the running state of the vehicle, the fuel efficiency of the vehicle may be deteriorated.

### SUMMARY OF THE INVENTION

It is an object of the invention to provide an improved shift control apparatus of a transmission for a vehicle.

This object is solved for example by the features of claim 1. Further developments are subject matter of the further claims.

According to an embodiment of the invention, a shift control apparatus of transmission for a vehicle including a plurality of gear stages for automatic transmission and an emergency low gear stage set adjacent to a lowest gear stage of the plurality of gear stages, the emergency low gear stage having a gear ratio greater than that of the lowest gear stage. The shift control apparatus is provided with power insufficiency determination means that determines whether the vehicle is in a power insufficiency state requiring a driving force more than a predetermined driving force obtained upon establishment of the lowest gear stage on the basis of a predetermined parameter that indicates a state of the vehicle during running, and shift control means that controls the transmission to automatically downshift to the emergency low gear stage when the power insufficiency determination means determines that the vehicle is in the power insufficiency state. When it is determined that the driving force larger than that obtained upon establishment of the lowest speed gear stage is required, downshifting is automatically performed from the lowest speed gear stage to the emergency low speed gear stage. In the case where the driving force larger than that obtained by the lowest speed gear stage within the automatic transmission range for the normal running state is required, downshifting is automatically performed from the lowest speed gear stage to the emergency low speed gear stage, providing the gear ratio greater than that of the lowest speed gear stage without requiring skilled technique.

The power insufficiency determination means determines that the vehicle is in the power insufficiency state when an actual ascending slope of a road on which the vehicle is running becomes greater than a predetermined ascending slope of the road on which the vehicle is capable of running at the lowest gear stage. This makes it possible to provide substantially high driving force required for the vehicle to run on the road with a sharp slope.

The vehicle includes at least one automatic clutch disposed on a power transmission path between an engine and the transmission. The power insufficiency determination means determines that the vehicle is in the power insufficiency state when the vehicle is in one of a stopped state and substantially stopped state, and a slip amount of the automatic clutch becomes equal to or greater than a predetermined value. This makes it possible to increase the gear ratio of the transmission when a slip amount of the automatic clutch is equal to or higher than the predetermined value while the vehicle is in a stopped or substantially stopped state. The required driving force, thus, can be automatically obtained.

The shift control apparatus has an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle. The shift control means controls the transmission to automatically downshift to the emergency low speed gear stage in the automatic shift mode. This allows the transmission to automatically perform downshifting from the lowest speed gear stage to the emergency low speed gear stage when it is determined that the driving force of the vehicle in the automatic shift mode becomes insufficient.

The shift control apparatus has an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle. The shift control means controls the transmission to downshift to the emergency low speed gear stage in the manual shift mode in response to an operation of a manual shift command switch. This allows the transmission to automatically perform downshifting from the lowest speed gear stage to the emergency low speed gear stage upon operation of a manual transmission command switch even in the manual transmission mode. The required high driving force, thus, can be obtained.

The shift control apparatus has an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle. The shift control means controls the transmission to downshift automatically to the emergency low speed gear stage in the manual shift mode. This allows the transmission to automatically perform downshifting from the lowest speed gear stage to the emergency low speed gear stage when it is determined that the driving force of the vehicle is insufficient even in the manual transmission mode.

The shift control apparatus employs the transmission formed as a manually shifted transmission of parallel bi-axial constant-mesh type. This makes it possible to increase the fuel efficiency because of reduced loss resulting from low friction.

Preferably a pair of gears disengaged from the emergency low speed gear in a normal state, and the emergency low speed gear stage is established by bringing the pair of gears into engagement with the emergency low speed gears. This makes it possible to improve the fuel efficiency owing to reduced loss as the gears are disengaged from the emergency low speed gears in a normal state, and brought into engagement therewith so as to establish the emergency low speed gear stage.

### BRIEF DESCRIPTION OF THE DRAWINGS

FIG. 1 is a schematic diagram illustrating the construction of a vehicular drive apparatus including a shift control apparatus of a vehicular transmission according to an embodiment of the invention;
FIG. 2 is a schematic diagram illustrating the construction of an automatic clutch and a stepped transmission shown in FIG. 1;
FIG. 3 is a functional block diagram illustrating the main portion of a control function of an electronic control unit for shifting shown in FIG. 1;
FIG. 4 is a normally-used shift map, which is used for normal shift control in shift control means shown in FIG. 3;
FIG. 5 is an emergency shift map, which is used for shift control when a driving force is insufficient in the shift control means shown in FIG. 3;
FIG. 6 is a flowchart illustrating the main portion of the control operation of the electronic control unit for shifting shown in FIG. 1; and
FIG. 7 is a schematic diagram illustrating the construction of a stepped transmission according to another embodiment of the invention, which corresponds to FIG. 2.

### DETAILED DESCRIPTION OF PREFERRED EMBODIMENTS

Hereinafter, an embodiment of the invention will be described with reference to the accompanying drawings.

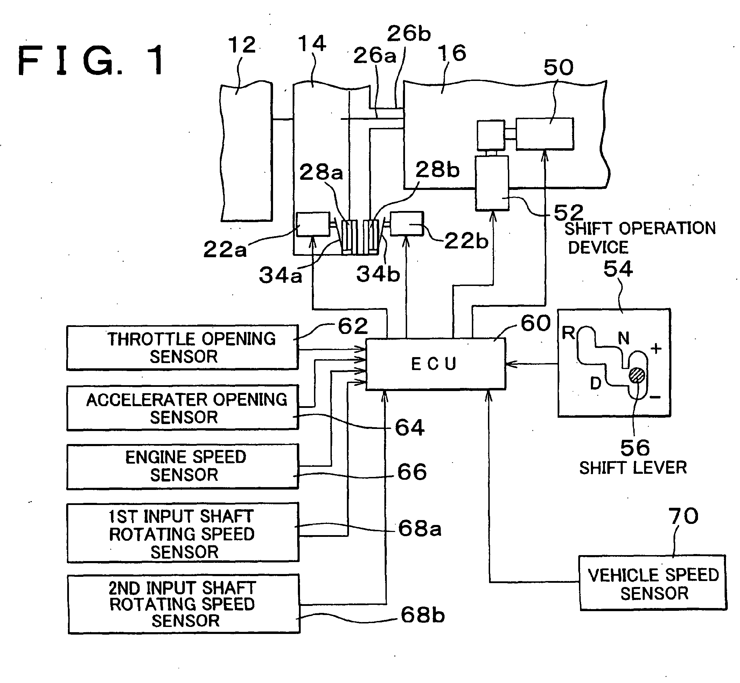

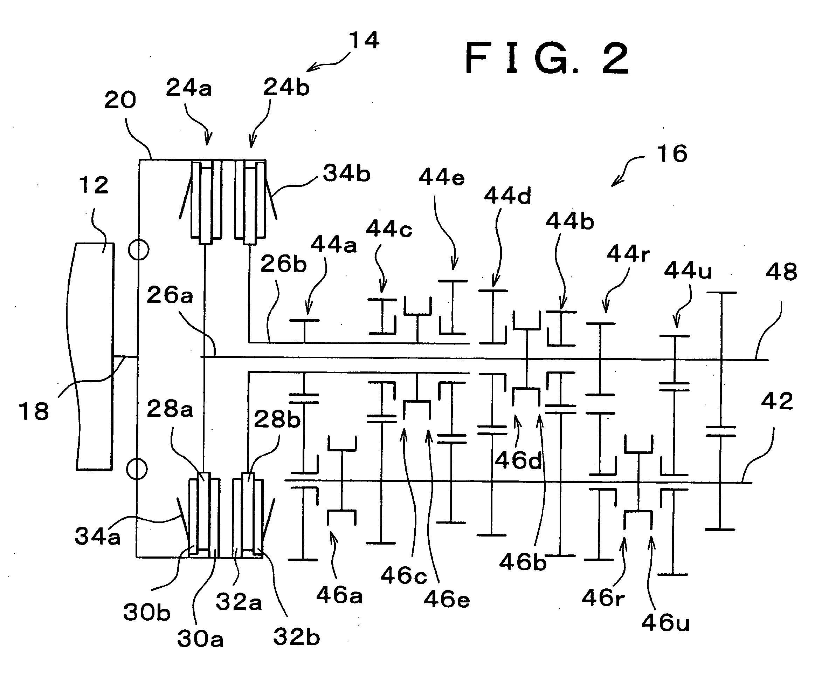

FIG. 1 is a schematic diagram illustrating the construction of a driving apparatus 10 for a vehicle and a control apparatus. An engine 12 serving as a power source or a driving power source generates power so as to be input to a transmission 16 via an automatic clutch 14. Then power output from the transmission 16 is transmitted to driving wheels via a differential gear device (not shown) and an axle (not shown). FIG. 2 is a schematic diagram illustrating the construction of the automatic clutch 14 and the transmission 16.

Referring to FIG. 2, the automatic clutch 14 is provided in a clutch case 20 attached to a crankshaft 18 of the engine 12. The automatic clutch 14 includes a pair of a first friction clutch 24a and a second friction clutch 24b both of which are dry type single disc clutches. The first friction clutch 24a and the second friction clutch 24b are automatically engaged or released by a first clutch release motor 22a and a second clutch release motor 22b, both of which function as clutch actuators. The above-mentioned clutch case 20 also functions as a flywheel. The first friction clutch 24a and the second friction clutch 24b are configured to have a first clutch disc 28a, a second clutch disc 28b, a first fixed pressing plate 30a, a first movable pressing plate 30b, a second fixed pressing plate 32a, a second movable pressing plate 32b, a first diaphragm spring 34a, and a second diaphragm spring 34b. The first clutch disc 28a and the second clutch disk 28b are provided on a first clutch output shaft 26a (a first input shaft of the transmission 16) and a second clutch output shaft 26b (a second input shaft of the transmission 16) concentric therewith, respectively. The first clutch output shaft 26a and the second clutch output shaft 26b are concentric with each other. The first fixed pressing plate 30a and the first movable pressing plate 30b, and the second fixed pressing plate 32a and the second movable pressing plate 32b are provided in the clutch case 20 so as to press and interpose the first clutch disc 28a and the second clutch disc 28b, respectively. The first diaphragm spring 34a and the second diaphragm spring 34b urge the first movable pressing plate 30b and the second movable pressing plate 32b against the first fixed pressing plate 30a and the second fixed pressing plate 32b, respectively so as to press the first clutch disc 28a and the second clutch disc 28b for transmitting power. Referring to FIG. 1, the above-mentioned first clutch release motor 22a and the second clutch release motor 22b are respectively engaged with the first diaphragm spring 34a and the second diaphragm spring 34b directly or indirectly . The first clutch release motor 22a and the second clutch release motor 22b disengage the first friction clutch 24a and the second friction clutch 24b, respectively so as to reduce the urging force applied to the first movable pressing plate 30b and the second movable pressing plate 32b.

The transmission 16 is of a parallel bi-axial type constant-mesh type. This type of transmission is well known as a manual transmission. However, the transmission 16 also may function as an automatic transmission, in which a gear stage Gi (i = 1 to 5), i.e., a gear ratio γ (a rotating speed N_{IN} of the first input shaft 26a or the second input shaft 26b / a rotating speed N_{OUT} of an output shaft 48) can be automatically selected using an electric or hydraulic select actuator 50 and a shift actuator 52. The transmission 16 includes (a) the first input shaft 26a and the second input shaft 26b which are concentric with each other; (b) a counter shaft 42 which is provided in parallel with the first input shaft 26a and the second input shaft 26b; (c) pairs of shift gears 44a to 44e with different gear ratios which are provided between the first and second input shafts 26a, 26b and the counter shaft 42 such that they are engaged in a normal state, a pair of reverse gear 44r, and a pair of emergency low speed gear 44u; (d) multiple synchro mesh type positive clutches 46a to 46e, 46r, and 46u corresponding to the pairs of shift gear 44a to 44e, the reverse gear 44r, and the emergency low speed gear 44u, respectively; and (e) the output shaft 48 which is provided in parallel with the counter shaft 42, and which is connected to an end thereof. When the shift actuator 52 drives one shift fork selected by the select actuator 50 from among four shift forks operatively coupled to the positive clutches 46a to 46e, 46r, and 46u, a desired gear stage among forward five gear stages Gi (i = 1 to 5) is established. Note that a pinion (not shown) is provided between the reverse gears 44r such that the pinion is mutually engaged with the gears 44r to make the rotating direction of the output shaft 48 opposite to the rotating direction during forward movement.

Referring to FIG. 2, when power is transmitted via the pair of shift gears 44a due to engagement of the positive clutch 46a, a first speed gear stage G₁ is established. The first speed gear stage G₁ has a gear ratio γ₁, for example, approximately 3.56, as the greatest gear ratio in the normally-used automatic shift range. When power is transmitted via the pair of shift gear 44b due to engagement of the positive clutch 46b, a second speed gear stage G₂ is established. The second speed gear stage G₂ has a gear ratio γ₂ which is smaller than the gear ratio γ₁. When power is transmitted via the pair of shift gear 44c due to engagement of the positive clutch 46c, a third speed gear stage G₃ is established. The third speed gear stage G₃ has a gear ratio γ₃ which is smaller than the gear ratio γ₂. When power is transmitted via the pair of shift gear 44d due to engagement of the positive clutch 46d, a fourth speed gear stage G₄ is established. The fourth speed gear stage G₄ has a gear ratio γ₄ (= 1) which is smaller than the gear ratio γ₃. When power is transmitted via the pair of shift gear 44e due to engagement of the positive clutch 46e, a fifth speed gear stage G5 is established. The fifth speed gear stage G₅ has a gear ratio γ₅ (<1) which is smaller than the gear ratio γ₄. When power is transmitted via the pair of shift gear 44r due to engagement of the positive clutch 46r, a reverse gear stage Gr is established. In addition, when power is transmitted via the pair of shift gear 44u due to engagement of the positive clutch 46u, an emergency low speed gear stage Gu is established. The emergency low speed gear stage Gu has a gear ratio γu, for example, approximately 4.50 which is greater than the gear ratio γ₁.

In the above-mentioned transmission 16, the pair of shift gears 44a for establishing the first gear stage G₁, the pair of shift gears 44c for establishing the third gear stage G₃, and the pair of shift gears 44e for establishing the fifth gear stage G₅ are provided between the second input shaft 26b and the counter shaft 42. In addition, the pair of shift gears 44b for establishing the second gear stage G₂ and the pairs of shift gears 44d for establishing the fourth gear stage G₄ are provided between the first input shaft 26a and the counter shaft 42. When shifting to an adjacent gear stage is sequentially performed, the first friction clutch 24a and the second friction clutch 24b are alternately controlled to be opened or closed. Accordingly, it is possible to suitably prevent torque loss during shifting by sliding and disengaging one of the first friction clutch 24a and the second friction clutch 24b, while engaging the other.

Referring to FIG. 1, a shift operation device 54 is disposed, for example, next to a driver's seat. A shift lever 56 is provided in the shift operation device 54. The shift lever 56 can be operated to move to a reverse position R for backing up; a neutral position N for bringing the vehicle into a neutral state in which a power transmitting path in the transmission 16 is interrupted to prevent engagement of all the positive clutches 46a to 46e, 46r, and 46u; a forward running position D in the automatic shift mode; an upshift command position "+" in the manual shift mode; and a downshift command position "-" in the manual shift mode. The shift operation device 54 is provided with a switch (not shown) for detecting the operation position of the shift lever 56. Note that a parking position P for locking the output shaft 48 of the transmission 16 may be provided next to the above-mentioned reverse position R.

The above-mentioned shift operation device 54 supplies an electronic control unit 60 with a signal indicative of the operation position of the shift lever 56 operated by the driver. A throttle opening sensor 62 detects a throttle opening θ_{TH} (%) of the engine 12, and supplies the electronic control unit 60 with a signal indicative of the throttle opening θ_{TH}. An accelerator opening sensor 64 detects an accelerator opening θ_{ACC} (%) of an accelerator (not shown), and supplies the electronic control unit 60 with a signal indicative of the accelerator opening θ_{ACC}. An engine rotating speed sensor 66 detects a rotating speed N_{E} of the crank shaft 18 of the engine 12, i.e., an input rotating speed of the friction clutches 24a, 24b, and supplies the electronic control unit 60 with a signal indicative of the engine speed N_{E}. A first input shaft rotating speed sensor 68a and a second input shaft rotating speed sensor 68b detect a first input shaft rotating speed N_{IN}a and a second input shaft rotating speed N_{IN}b, and supply the electronic control unit 60 with signals indicative of the first input shaft rotating speed N_{IN}a and the second input shaft rotating speed N_{IN}b, respectively. In addition, a vehicle speed sensor 70 detects a rotating speed N_{OUT} of the output shaft 48 of the transmission 16, calculates a vehicle speed V (km/h) based on the output shaft rotating speed N_{OUT}, and supplies the electronic control unit 60 with signals indicative of the output shaft rotating speed N_{OUT} and the vehicle speed V.

The above-mentioned electronic control unit 60 is a so-called microcomputer including a CPU, a ROM, a RAM, input and output interfaces, and the like. The electronic control unit 60 processes the input signals according to a program previously stored in the ROM using a temporary memory function, and controls the first clutch release motor 22a, the second clutch release motor 22b, the select actuator 50, and the shift actuator 52 in order to perform the engagement control of the automatic clutch 14 and the shift control of the transmission 16.

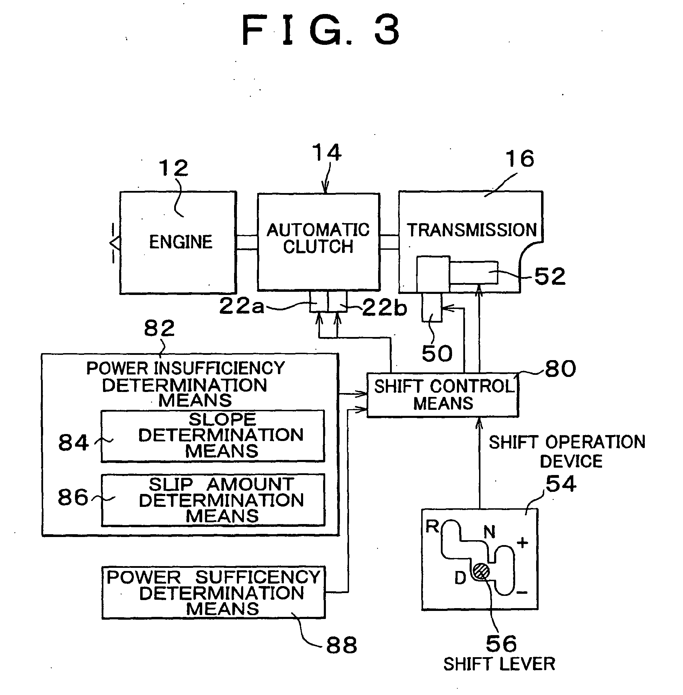

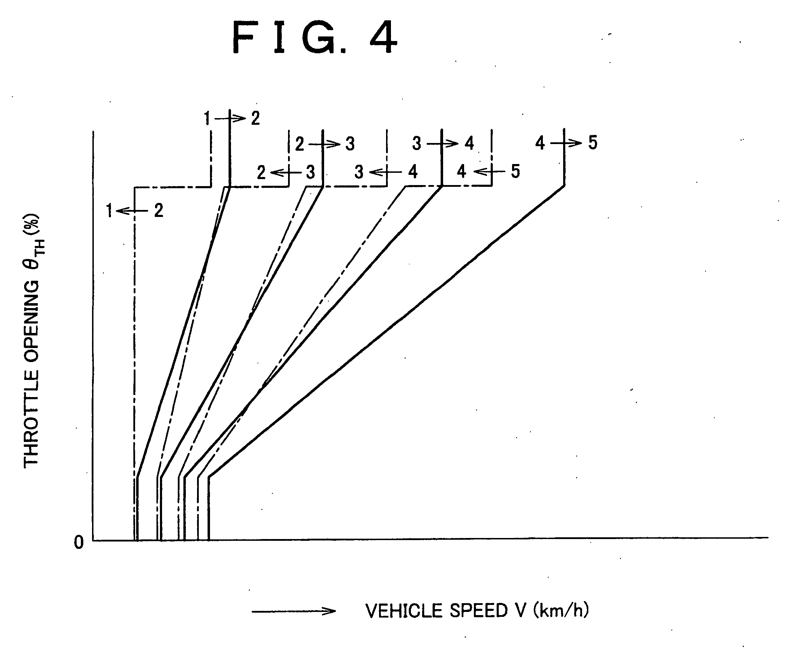

FIG. 3 is a functional block diagram illustrating a main portion of the control function of the above-mentioned electronic control unit 60. When the shift lever 56 is selected at the position D in the automatic shift mode, shift control means 80 determines if gear-shifting is required based on the actual vehicle state (the vehicle speed V and the throttle opening θ_{TH}) obtained in accordance with, for example, a map for normal running, i.e., a normally-used shift map shown in FIG. 4. Then, the shift control means 80 controls the first clutch release motor 22a, the second clutch release motor 22b, the select actuator 50, and the shift actuator 52 so as to perform the required gear-shifting, that is, to establish the required gear stage. As is apparent from FIG. 4, the shifting in the automatic shift mode ranges between the first gear stage G₁ and the fifth gear stage G₅.

Power insufficiency determination means 82 determines whether the driving force required for driving the vehicle becomes greater than the driving force generated at the lowest gear stage of the transmission 16, i.e., the first gear stage G₁ based on a map including a predetermined relationship. The power insufficiency determination means 82 includes slope determination means 84 and slip amount determination means 86. The slope determination means 84 determines whether the required driving force of the vehicle has become larger than that obtained upon establishment of the first gear stage G₁. When the actual vehicle acceleration (change rate of the vehicle speed V) is greater than the vehicle acceleration corresponding to the present throttle opening θ_{TH} during running on the flat road by a predetermined amount or more, it is determined that the actual slope of the ascending road has become greater than the predetermined slope of the ascending road on which the vehicle is able to run at the first gear stage G₁. The slip amount determination means 86 determines whether the vehicle speed V is lower than a vehicle speed value V₀ (appropriately 5 km/h, for example) which is predetermined to determine if the vehicle speed V indicate the substantially stopped state of the vehicle as well as determines whether the slip amount (= NE - N_{IN}b)of the automatic clutch 14 has become a predetermined value or greater. The slip amount of the automatic clutch 14 represents the slip amount (= NE - N_{IN}a or N_{IN}b) of one of the first friction clutch 24a and the second friction clutch 24b, which has been engaged.

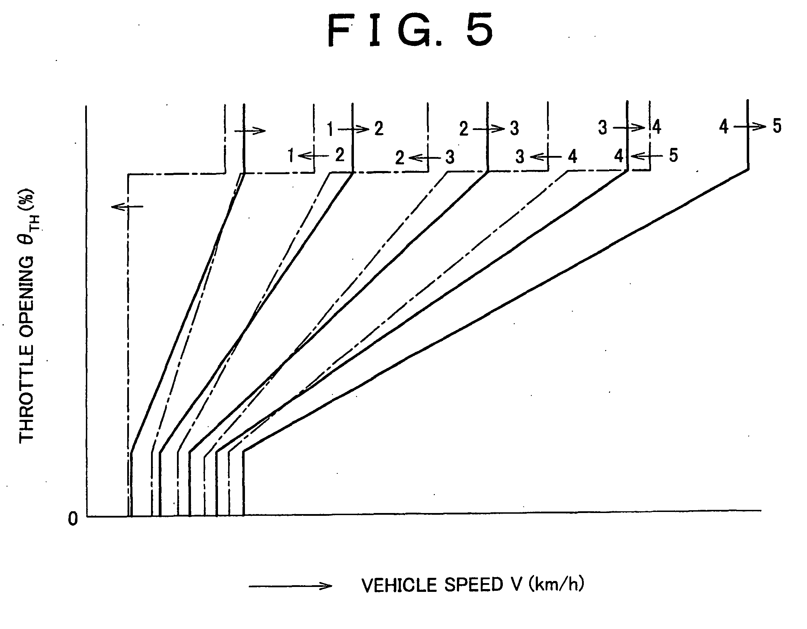

When the power insufficiency determination means 82 determines that, either in the automatic mode or the manual mode, the driving force which is greater the driving force to be generated at the lowest gear stage, that is, the first gear stage G₁ of the transmission 16 is required for driving the vehicle, the shift control means 80 determines the gear stage to be selected on the basis of the actual state of the vehicle (vehicle speed V and the throttle opening θ_{TH}) referring to a map indicating the relationship between the throttle opening and the vehicle speed. Then the first clutch release motor 22a, the second clutch release motor 22b, the select actuator 50, and the shift actuator 52 are controlled so as to perform shifting to the selected gear stage. As is apparent from FIG. 5, the shifting with insufficient driving force is performed in the range from the emergency low gear stage Gu to the fifth gear stage G₅. When the vehicle is in the stopped state or running at a relatively lower speeds during running at the first gear stage G₁, it is determined that the driving force of the vehicle is insufficient, requiring the driving force further greater than the driving force generated upon establishment of the first gear stage G₁. In the aforementioned case, the emergency low gear stage Gu may be selected from the first gear stage automatically.

Power sufficiency determination means 88 determines that the power insufficiency state has been corrected when the vehicle speed V exceeds a reference vehicle speed value V₁ predetermined to, for example, approximately 20 km/h. The shift control means 80 switches the normal map as shown in FIG. 4 from the emergency map as shown in FIG. 5 when the power sufficiency determination means 88 determines that the power insufficiency state has been corrected. Subsequently the shift control means 80 executes the automatic shifting control on the basis of the switched map.

When the manual shift mode is selected by operating the shift lever 56, the shift control means 80 upshifts or downshifts the transmission 16 to the adjacent gear stage in accordance with the operating position "+" or "-" of the shift lever 56. The shifting in the manual shift mode is performed in the range from the emergency low gear stage Gu to the fifth gear stage G₅. When it is determined that the driving force for the vehicle is insufficient, the shift lever 56 is operated so as to downshift to the emergency low gear stage Gu.

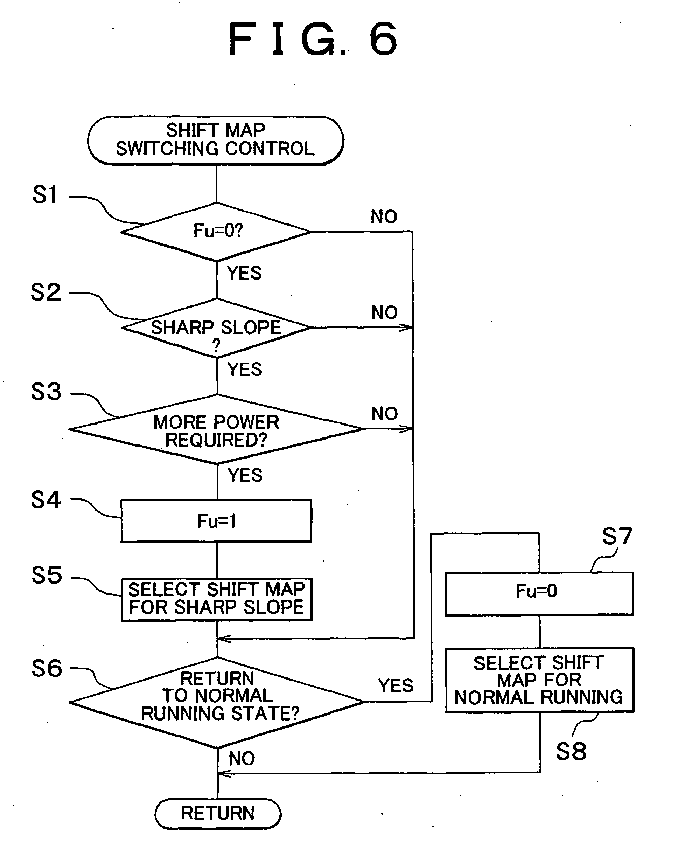

Hereinafter, the main portion of the control operation of the ECU 60, that is, control for switching the shift map in case of insufficient driving force for the vehicle will be described referring to a flowchart of FIG. 6. The routine shown in FIG. 6 is repeatedly performed at a predetermined cycle time, for example, at the cycle time ranging between several milliseconds and several ten milliseconds either in the automatic shift mode or the manual shift mode.

Referring to FIG. 6, in step S1, it is determined whether a flag Fu indicating the state of insufficient driving force has been cleared, that is, the flag Fu has been set to 0. The flag Fu can be used for indicating if the slope of the ascending road on which the vehicle is running exceeds the predetermined value. As YES is expected to be obtained in step S1 in the initial stage of the routine, the process proceeds to step S2. In step S2, the power insufficiency determination means 82 determines whether the driving power is insufficient for the vehicle to run on the ascending road with slope greater than the predetermined value. When the actual vehicle acceleration is equal to or lower than the vehicle acceleration corresponding to the throttle opening θ_{TH} obtained during running on the flat road, or the slip amount of the automatic clutch 14 exceeds the predetermined value at the vehicle speed V that is substantially zero, it is determined that the slope of the ascending road has been greater than the predetermined slope value. If YES is obtained in step S2, the process proceeds to step S3 where it is determined that the vehicle has been in a predetermined stopped state when the vehicle speed V is 0, the brake pedal is at ON state, and the side brake is at ON state, respectively.

If YES is obtained in step S3, the process proceeds to step S4 where the flag Fu is set to 1. The process then proceeds to step S5 corresponding to the shift control means 80. In step S5, the shift map shown in FIG. 4 is switched to the shift map shown in FIG. 5. Accordingly downshifting from the first gear stage G1 to the emergency low gear stage Gu is automatically performed, and the vehicle runs at the emergency low gear stage Gu. The process proceeds to step S6 corresponding to the power sufficiency determination means 88, where it is determined whether the vehicle state has been in the predetermined state, for example, whether the vehicle speed V is equal to or greater than 20 km. As NO is obtained in step S6 in the initial step, the routine returns to step S 1 and subsequent steps.

In the aforementioned control cycle, as the flag Fu is set at "1", NO is obtained in step S1 in the next control cycle, shift control according to the shift map shown in FIG. 5 is continued, that is, the vehicle continues running at the emergency low speed gear stage Gu. If the vehicle speed V increases as the vehicle is operated by the high driving force, YES is obtained in step S6. The process then proceeds to step S7 where the flag Fu is cleared to 0. Then in step S8 corresponding to the shift control means 80, the shift map shown in FIG. 5 is switched to the shift map used for the normal operation of the vehicle such that the normal automatic transmission control is executed subsequently.

According to the embodiment, if it is determined that the driving force that is greater than that obtained upon establishment of the first gear stage (the lowest speed gear stage) G₁ is required in step S2 (corresponding to the power insufficiency determination means 82), the transmission 16 is downshifted to the emergency low gear stage Gu from the first gear stage G₁ automatically in step S5 (corresponding to the shift control means 80). That is, in the state requiring the driving force greater than the one obtained at the lowest speed gear stage within the automatic shifting range for normal vehicle operation, the emergency low speed gear stage with greater gear ratio than that of the first gear stage G₁. Such control is automatically executed irrespective of driving skill of the vehicle operator. This makes it possible to automatically control such that greater driving force is provided to correct insufficient state without deteriorating the fuel efficiency of the vehicle running in the normal state.

Also, according to the embodiment, the power insufficiency determination means 82 determines that the driving force of the vehicle is insufficient when the actual ascending slope becomes greater than the predetermined ascending slope of the road on which the vehicle is able to run at the first gear stage of the vehicle (the lowest speed gear stage) G₁. Therefore, it is possible to automatically obtain sufficient driving force required for the vehicle to run on the road with a sharp slope.

According to the embodiment, the power insufficiency determination means 82 determines that the driving force of the vehicle is insufficient when the vehicle is in the stopped state or in the substantially stopped state, and at the same time, the slip amount of the automatic clutch 14 is equal to or larger than the predetermined value. Therefore, the gear ratio of the stepped transmission is increased when the slip amount of the automatic clutch is equal to or larger than the predetermined value while the vehicle is in the stopped state or in the substantially stopped state. Accordingly, the required driving force can be automatically obtained.

According to the embodiment, the shift control means 80 switches the shift mode between the automatic shift mode and the manual shift mode. In the automatic shift mode, the gear stage of the transmission 16 is automatically selected based on the actual vehicle state according to, for example, the previously-stored shift map shown in FIG. 4. In the manual shift mode, the gear stage of the transmission 16 is selected by manual shift operation of the driver. When it is determined that the driving force is insufficient either in the automatic shift mode or the manual shift mode, the shift control means 80 automatically downshifts the transmission 16 from the first gear stage (the lowest speed gear stage) G₁ to the emergency low gear stage Gu. Therefore, when the driving force of the vehicle becomes insufficient, it is possible to automatically downshift the transmission 16 to the emergency low gear stage Gu without requiring skilled technique. Accordingly, both the high driving force and good fuel efficiency can be obtained. In the manual shift mode, the shift control means 80 downshifts the transmission 16 to the emergency low speed gear stage Gu in response to the operation of the manual shift command switch by the shift lever 56 in the shift operation device 54. Therefore, even in the manual shift, it is possible to downshift the transmission 16 to the emergency low speed gear stage Gu in response to the operation of the manual shift command switch. Accordingly, a high driving force of the vehicle can be obtained as required.

According to the embodiment, since the stepped transmission 16 is a parallel two-axes type constant-mesh transmission, the friction is reduced, resulting in reduced loss. Therefore, the fuel efficiency is further improved.

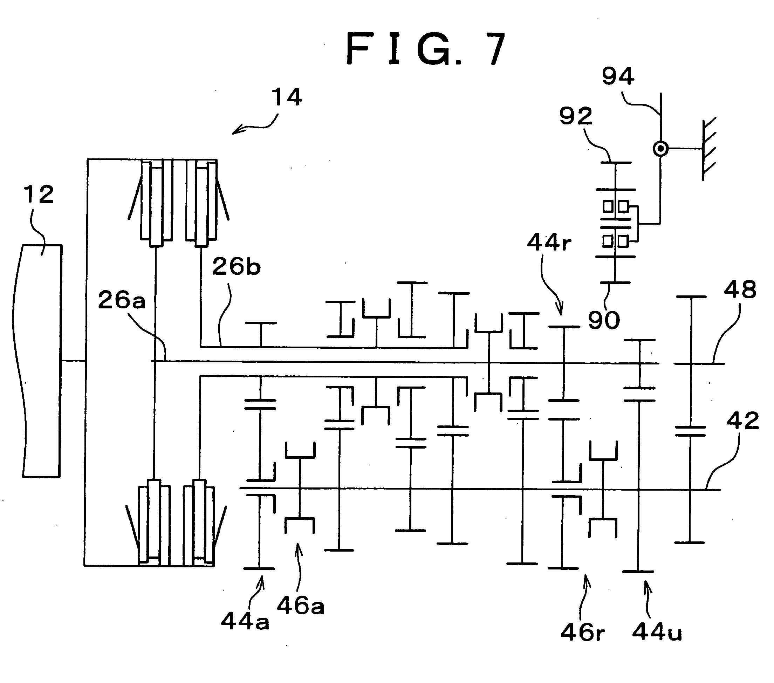

FIG. 7 is a schematic diagram illustrating the construction of a transmission 16 according to another embodiment of the invention. In this embodiment, the same components as in the above-mentioned embodiment are identified with the same reference numerals, and the descriptions thereof are omitted.

The transmission 16 shown in FIG. 7 is different from the transmission 16 shown in FIG. 2 in that:
(a) the pair of emergency low speed gears 44u are normally in a disengaged state;
(b) a pair of gears 90, 92 constantly in an engaged state are normally disengaged from the emergency low speed gears 44u, and the gears 90, 92 are brought into engaged with the emergency low speed gears 44u for establishing the emergency low speed gear stage Gu; and
(c) the positive clutch 46u for the emergency low gears is not provided.

The pair of gears 90, 92 are rotatively supported so as to be moveable in the direction of rotating axis by the engagement operation lever 94 operated by the actuator or the manual lever. According to the embodiment, since the emergency low speed gears 44u for establishing the emergency low gear stage Gu are normally in a disengaged state, the rotation loss of the transmission 16 is further reduced, improving the fuel efficiency.

Although the embodiments of the invention have been described in detail with reference to the accompanying drawings, it is to be understood that the invention is not limited to these embodiments, and that the invention may be realized in other embodiments in which various changes and modifications are made based on the knowledge of persons skilled in the art.

For example, although the transmission 16 according to the above-mentioned embodiments is a parallel two-axes type constant-mesh manual transmission, it is possible to employ an automatic transmission using a shift actuator for selectively engaging elements of multiple sets of planetary gear devices. It is also possible to employ a belt-type continuously variable transmission in which a transmission belt is wound around a pair of variable pulleys each having variable effective diameter, in which a manual shift mode is set such that gear stages with multiple gear ratios are selectively established according to a command from a shift lever or a manual shift operation switch. Further, a continuously variable transmission with a sub-transmission and the like may be employed.

The automatic clutch 14 according to the embodiments is operated to be engaged or released by the first clutch release motor 22a and the second clutch release motor 22b both of which are electrically driven. However, the automatic clutch 14 may be operated by another actuator such as a hydraulic cylinder. Although the automatic clutch 14 according to the embodiments includes a pair of the first friction clutch 24a and the second friction clutch 24b, a single friction clutch may be employed. Further the automatic clutch 14 may be a wet type multiple disc clutch, an electromagnetic type clutch in which a friction disc is pressed due to an attraction force of a magnet, an electromagnetic type magnetic particle clutch in which magnetic particles are adsorbed into a gap, and power is transmitted through the magnetic particles, or another type of clutch.

In the embodiments, the shifting state of the vehicle is determined by the shift control means 80 based on the vehicle state defined by the throttle opening θ_{TH} and the vehicle speed V. However, instead of the throttle opening θ_{TH}, it is possible to use a parameter representing an engine load, such as an accelerator opening θ_{ACC}, an intake air amount, an intake pipe negative pressure, or a fuel injection amount.

In the embodiments, the shift control means 80 switches the shift map for an emergency state shown in FIG. 5 from the shift map for a normal state shown in FIG. 4 so as to automatically establish the emergency low speed gear stage Gu when the power insufficiency determination means 82 determines the power insufficiency state. However, instead of switching between the shift maps, the shift control means 80 may be structured to simply downshift the transmission to the emergency low speed gear stage Gu from the first gear stage G₁

In the embodiments, the power insufficiency determination means 82 determines insufficiency state when the ascending slope derived from the throttle opening θ_{TH} is equal to or greater than the predetermined value and the slip amount of the automatic clutch 14 is equal to or greater than the predetermined value. However, the power insufficiency state may be determined based on the other conditions such as the inclination of the road detected by the inclination angle detector.

When power insufficiency determination means 82 determines that a vehicle is in a power insufficiency state requiring a driving force higher than that obtained at the lowest gear stage G₁ of multiple gears for normal running of the vehicle, the shift control means 80 controls the transmission 16 to automatically perform downshifting from the lowest gear stage G₁ to the emergency low speed gear stage Gu. This makes it possible to establish the emergency low speed gear stage with the gear ratio greater than that obtained at the lowest gear stage G₁ for normal running of the vehicle without requiring skilled technique.

When power insufficiency determination means (82) determines that a vehicle is in a power insufficiency state requiring a driving force higher than that obtained at the lowest gear stage (G1) of multiple gears for normal running of the vehicle, the shift control means 80 controls the transmission (16) to automatically perform downshifting from the lowest gear stage (G1) to the emergency low speed gear stage (Gu). This makes it possible to establish the emergency low speed gear stage with the gear ratio greater than that obtained at the lowest gear stage (G1) for normal running of the vehicle without requiring skilled technique.
Selected figure: Fig. 3

## Claims

1. A shift control apparatus of a transmission (16) for a vehicle including a plurality of gear stages for automatic transmission and an emergency low gear stage (Gu) set adjacent to a lowest gear stage (G₁) of the plurality of gear stages, the emergency low gear stage having a gear ratio greater than that of the lowest gear stage; the shift control apparatus comprising:
power insufficiency determination means (82) that determines whether the vehicle is in a power insufficiency state requiring a driving force more than a predetermined driving force obtained upon establishment of the lowest gear stage on the basis of a predetermined parameter that indicates a state of the vehicle during running; and
shift control means (80) that controls the transmission (16) to automatically downshift to the emergency low gear stage when the power insufficiency determination means (82) determines that the vehicle is in the power insufficiency state.

2. The shift control apparatus according to claim 1, wherein the parameter comprises a relationship of a vehicle speed with respect to one of a throttle opening, accelerator opening, an intake air amount, a negative pressure of an intake pipe, and a fuel injection amount.

3. The shift control apparatus according to claim 1 or 2, wherein the power insufficiency determination means determines that the vehicle is in the power insufficiency state when an actual ascending slope of a road on which the vehicle is running becomes greater than a predetermined ascending slope of the road on which the vehicle is capable of running at the lowest gear stage.

4. The shift control apparatus according to claim 1, wherein
the vehicle includes at least one automatic clutch (14) disposed on a power transmission path between an engine and the transmission (16); and
the power insufficiency determination means (82) determines that the vehicle is in the power insufficiency state when the vehicle is in one of a stopped state and substantially stopped state, and a slip amount of the automatic clutch (14) becomes equal to or greater than a predetermined value.

5. The shift control apparatus according to claim 4, wherein the at least one automatic clutch (14) comprises one of a dry type clutch, a wet type multiple disc clutch, an electromagnetic type clutch, and an electromagnetic type magnetic particle clutch.

6. The shift control apparatus according to any one of claims 1 to 5, wherein
an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle are set, and
the shift control means (80) controls the transmission (16) to automatically downshift to the emergency low speed gear stage in the automatic shift mode.

7. The shift control apparatus according to any one of claims 1 to 5, wherein
an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle are set, and
the shift control means (80) controls the transmission (16) to downshift to the emergency low speed gear stage in the manual shift mode in response to an operation of a manual shift command switch.

8. The shift control apparatus according to any one of claims 1 to 5, wherein
an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle are set, and
the shift control means (80) controls the transmission (16) to downshift automatically to the emergency low speed gear stage in the manual shift mode.

9. The shift control apparatus according to any one of claims 1 to 8, wherein the transmission (16) comprises a manually shifted transmission of parallel bi-axial constant-mesh type.

10. The shift control apparatus according to claim 9, further comprising a pair of gears (90, 92) disengaged from the emergency low speed gears in a normal state, wherein the emergency low speed gear stage (Gu) is established by bringing the pair of gears into engagement with the emergency low speed gear.

11. The shift control apparatus according to any one of claims 1 to 10, wherein the transmission comprises one of an automatic transmission with a plurality of planetary gear sets, a continuously variable transmission with a manual shift mode, and a continuously variable transmission with a sub-transmission.

12. A shift control method of a transmission (16) for a vehicle including a plurality of gear stages for automatic transmission and an emergency low gear stage (Gu) set adjacent to a lowest gear stage (G₁) of the plurality of gear stages, the emergency low gear stage having a gear ratio greater than that of the lowest gear stage, the shift control method comprising the steps of:
determining whether the vehicle is in a power insufficiency state requiring a driving force more than a predetermined driving force obtained upon establishment of the lowest gear stage on the basis of a predetermined parameter that indicates a state of the vehicle during running; and
controlling the transmission (16) to automatically downshift to the emergency low gear stage when it is determined that the vehicle is in the power insufficiency state.

13. A shift control method according to claim 12, wherein the parameter comprises a relationship of a vehicle speed with respect to one of a throttle opening, accelerator opening, an intake air amount, a negative pressure of an intake pipe, and a fuel injection amount.

14. A shift control method according to claim 12 or 13, wherein the power insufficiency determination means determines that the vehicle is in the power insufficiency state when an actual ascending slope of a road on which the vehicle is running becomes greater than a predetermined ascending slope of the road on which the vehicle is capable of running at the lowest gear stage.

15. A shift control method according to claim 12, wherein
the vehicle includes at least one automatic clutch (14) disposed on a power transmission path between an engine and the transmission (16); and
it is determined that the vehicle is in the power insufficiency state when the vehicle is in one of a stopped state and substantially stopped state, and a slip amount of the automatic clutch (14) becomes equal to or greater than a predetermined value.

16. A shift control method according to claim 15, wherein the at least one automatic clutch (14) comprises one of a dry type clutch, a wet type multiple disc clutch, an electromagnetic type clutch, and an electromagnetic type magnetic particle clutch.

17. A shift control method according to any one of claims 12 to 16, wherein
an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle are set, and
the transmission (16) is controlled to automatically downshift to the emergency low speed gear stage in the automatic shift mode.

18. A shift control method according to any one of claims 12 to 16, wherein
an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle are set, and
the transmission (16) is controlled to downshift to the emergency low speed gear stage in the manual shift mode in response to an operation of a manual shift command switch.

19. A shift control method according to any one of claims 12 to 16, wherein
an automatic shift mode in which one of the plurality of gear stages is automatically selected on the basis of an actual state of the vehicle in accordance with a previously stored shift map, and a manual shift mode in which one of the plurality of gear stages is selected by a manual shift operation of an operator of the vehicle are set, and
the transmission (16) is controlled to downshift automatically to the emergency low speed gear stage in the manual shift mode.

20. A shift control method according to any one of claims 12 to 19, wherein the transmission (16) comprises a manually shifted transmission of parallel bi-axial constant-mesh type.

21. A shift control method according to claim 20, wherein a pair of gears (90, 92) are disengaged from the emergency low speed gears in a normal state, and the emergency low speed gear stage (Gu) is established by bringing the pair of gears into engagement with the emergency low speed gear.

22. A shift control method according to any one of claims 12 to 21, wherein the transmission includes one of an automatic transmission with a plurality of planetary gear sets, a continuously variable transmission with a manual shift mode, and a continuously variable transmission with a sub-transmission.

## Patentansprüche

1. Schaltsteuergerät eines Getriebes (16) für ein Kraftfahrzeug mit einer Vielzahl an Gangschaltstufen für ein automatisches Getriebe und einer Notfallniedriggangstufe (Gu), die benachbart zu einer niedrigsten Gangschaltstufe (G₁) der Vielzahl an Gangschaltstufen eingestellt ist, wobei die Notfallniedriggangschaltstufe ein Übersetzungsverhältnis aufweist, das größer als dasjenige der niedrigsten Gangschaltstufe ist; wobei das Schaltsteuergerät folgendes aufweist:
eine Einrichtung (82) zur Bestimmung einer unzureichenden Leistung, die bestimmt, ob das Fahrzeug sich in einem Zustand einer unzureichenden Leistung befindet, bei dem eine Antriebsleistung erforderlich ist, die größer als eine vorbestimmte Antriebsleistung ist, die bei Verwirklichen der niedrigsten Gangschaltstufe erhalten wird, auf der Basis eines vorbestimmten Parameters, der einen Zustand des Fahrzeuges während der Fahrt anzeigt; und
eine Schaltsteuereinrichtung (80), die das Getriebe (16) so steuert, dass es automatisch zu der Notfallniedriggangschaltstufe herunterschaltet, wenn die Einrichtung (82) zur Bestimmung einer unzureichenden Leistung bestimmt, dass sich das Fahrzeug in einem Zustand einer unzureichenden Leistung befindet.

2. Schaltsteuergerät gemäß Anspruch 1, wobei der Parameter eine Beziehung einer Fahrzeuggeschwindigkeit in Bezug auf entweder eine Drosselöffnung, eine Gaspedalbetätigung, eine Einlassluftmenge, einen Unterdruck eines Einlassrohrs oder eine Kraftstoffeinspritzmenge aufweist.

3. Schaltsteuergerät gemäß Anspruch 1 oder 2, wobei die Einrichtung zur Bestimmung einer unzureichenden Leistung bestimmt, dass das Fahrzeug sich in einem Zustand einer unzureichenden Leistung befindet, wenn die momentane ansteigende Neigung einer Straße, auf der das Fahrzeug fährt, größer als eine vorbestimmte ansteigende Neigung der Straße wird, auf der das Fahrzeug dazu in der Lage ist, in der niedrigsten Gangschaltstufe zu fahren.

4. Schaltsteuergerät gemäß Anspruch 1, wobei
das Fahrzeug zumindest eine automatische Kupplung (14) aufweist, die an einer Kraftübertragungsbahn zwischen einem Verbrennungsmotor und dem Getriebe (16) angeordnet ist; und
die Einrichtung (82) zur Bestimmung einer unzureichenden Leistung bestimmt, dass sich das Fahrzeug in dem Zustand einer unzureichenden Leistung befindet, wenn das Fahrzeug sich in entweder einem angehaltenen Zustand oder einem im Wesentlichen angehaltenen Zustand befindet, und ein Rutschbetrag der automatischen Kupplung (14) gleich wie oder größer als ein vorbestimmter Wert wird.

5. Schaltsteuergerät gemäß Anspruch 4, wobei die zumindest eine automatische Kupplung (14) eine Kupplung der Trockenart, eine Mehrscheibenkupplung der nasslaufenden Art, eine Kupplung der elektromagnetischen Art oder eine Magnetpartikelkupplung der elektromagnetischen Art aufweist.

6. Schaltsteuergerät gemäß einem der Ansprüche 1 bis 5, wobei
ein automatischer Schaltmodus, bei dem eine aus der Vielzahl an Gangsschaltstufen automatisch auf der Grundlage eines momentanen Zustandes des Fahrzeugs gemäß einer zuvor gespeicherten Schaltzuordnung gewählt wird, und ein manueller Schaltmodus, bei dem eine aus der Vielzahl an Gangschaltstufen durch einen manuellen Schaltvorgang eines Bedieners des Fahrzeugs gewählt wird, eingestellt werden, und
die Schaltsteuereinrichtung (80) das Getriebe (16) so steuert, dass es automatisch zu der Notfallniedriggangschaltstufe in dem automatischen Schaltmodus herabschaltet.

7. Schaltsteuergerät gemäß einem der Ansprüche 1 bis 5, wobei
ein automatischer Schaltmodus, bei dem eine aus der Vielzahl an Gangschaltstufen automatisch auf der Grundlage eines momentanen Fahrzeugzustandes gemäß einer zuvor gespeicherten Schaltzuordnung gewählt wird, und ein manueller Schaltmodus, bei dem eine aus der Vielzahl an Gangschaltstufen durch einen manuellen Schaltvorgang eines Bedieners des Fahrzeuges gewählt wird, eingestellt werden, und
die Schaltsteuereinrichtung (80) das Getriebe (16) so steuert, dass es im Ansprechen auf eine Betätigung eines Schalters zum Befehlen eines manuellen Schaltens in dem manuellen Schaltmodus zu der Notfallniedriggangschaltstufe herabschaltet.

8. Schaltsteuergerät gemäß einem der Ansprüche 1 bis 5, wobei
ein automatischer Schaltmodus, bei dem gemäß einer zuvor gespeicherten Schaltzuordnung eine aus der Vielzahl an Gangschaltstufen automatisch auf der Grundlage eines momentanen Zustandes des Fahrzeugs gewählt wird, und ein manueller Schaltmodus, bei dem eine aus der Vielzahl an Gangschaltstufen durch einen manuellen Schaltvorgang eines Bedieners des Fahrzeugs gewählt wird, eingestellt werden, und
die Schaltsteuereinrichtung (80) das Getriebe (16) so steuert, dass es automatisch zu der Notfallniedriggangschaltstufe in dem manuellen Schaltmodus herabschaltet.

9. Schaltsteuergerät gemäß einem der Ansprüche 1 bis 8, wobei
das Getriebe (16) ein manuell geschaltetes Getriebe der parallelen biaxialen ständig im Zahneingriff stehenden Art aufweist.

10. Schaltsteuergerät gemäß Anspruch 9, das des Weiteren ein Paar an Zahnrädern (90, 92) aufweist, die von den Notfallniedriggangschaltzahnrädern in einem normalen Zustand außer Eingriff stehen, wobei die Notfallniedriggangschaltstufe (Gu) verwirklicht wird, indem das Paar an Zahnrädern mit dem Notfallniedriggangschaltzahnrad in Eingriff gebracht wird.

11. Schaltsteuergerät gemäß einem der Ansprüche 1 bis 10, wobei das Getriebe entweder ein automatisches Getriebe mit einer Vielzahl an Planetengetriebesätzen, ein kontinuierlich variables Getriebe mit einem manuellen Schaltmodus oder ein kontinuierlich variables Getriebe mit einem Nebengetriebe aufweist.

12. Schaltsteuerverfahren eines Getriebes (16) für ein Kraftfahrzeug mit einer Vielzahl an Gangschaltstufen für ein automatisches Getriebe und einer Notfallniedriggangschaltstufe (Gu), die benachbart zu der niedrigsten Gangschaltstufe (G₁) der Vielzahl an Gangschaltstufen eingestellt ist, wobei die Notfallniedriggangschaltstufe ein Übersetzungsverhältnis aufweist, das größer als dasjenige der niedrigsten Gangschaltstufe ist, wobei das Schaltsteuerverfahren die folgenden Schritte aufweist:
Bestimmen, ob das Fahrzeug in einem Zustand unzureichender Leistung ist, der eine Antriebsleistung erforderlich macht, die größer als eine vorbestimmte Antriebsleistung ist, die während des Verwirklichens der niedrigsten Gangschaltstufe erhalten wird, auf der Grundlage eines vorbestimmten Parameters, der einen Zustand des Fahrzeugs während der Fahrt anzeigt; und
Steuern des Getriebes (16) derart, dass es automatisch zu der Notfallniedriggangschaltstufe herabschaltet, wenn bestimmt worden ist, dass sich das Fahrzeug in dem Zustand unzureichender Leistung befindet.

13. Schaltsteuerverfahren gemäß Anspruch 12, wobei der Parameter eine Beziehung einer Fahrzeuggeschwindigkeit in Bezug auf entweder eine Drosselöffnung, eine Gaspedalbetätigung, eine Lufteinlassmenge, einen Unterdruck eines Einlassrohrs oder eine Kraftstoffeinspritzmenge aufweist.

14. Schaltsteuerverfahren gemäß Anspruch 12 oder 13, wobei
die Einrichtung zur Bestimmung einer unzureichenden Leistung bestimmt, dass sich das Fahrzeug in einem Zustand unzureichender Leistung befindet, wenn eine momentane ansteigende Neigung der Straße, auf der das Fahrzeug fährt, größer als eine vorbestimmte ansteigende Neigung der Straße wird, auf der das Fahrzeug dazu in der Lage ist, in der niedrigsten Gangschaltstufe zu fahren.

15. Schaltsteuerverfahren gemäß Anspruch 12, wobei
das Fahrzeug zumindest eine automatische Kupplung (14) aufweist, die an einer Kraftübertragungsbahn zwischen einem Verbrennungsmotor und dem Getriebe (16) angeordnet ist; und
bestimmt wird, dass sich das Fahrzeug in dem Zustand unzureichender Leistung befindet, wenn sich das Fahrzeug entweder in einem angehaltenen Zustand oder in einem Wesentlichen angehaltenen Zustand befindet, und ein Rutschbetrag der automatischen Kupplung (14) gleich wie oder größer als ein vorbestimmter Wert wird.

16. Schaltsteuerverfahren gemäß Anspruch 15, wobei die zumindest eine automatische Kupplung (14) entweder eine Kupplung der Trockenart, eine Mehrscheibenkupplung der nasslaufenden Art, eine Kupplung der elektromagnetischen Art oder eine Magnetpartikelkupplung der elektromagnetischen Art aufweist.

17. Schaltsteuerverfahren gemäß einem der Ansprüche 12 bis 16, wobei
ein automatischer Schaltmodus, bei dem eine aus der Vielzahl an Gangschaltstufen automatisch auf der Grundlage eines momentanen Zustandes des Fahrzeugs gemäß einer zuvor gespeicherten Schaltzuordnung gewählt wird, und ein manueller Schaltmodus, bei dem eine aus der Vielzahl an Gangschaltstufen durch einen manuellen Schaltvorgang eines Bedieners des Fahrzeugs gewählt wird, eingestellt werden, und
das Getriebe (16) so gesteuert wird, dass es automatisch zu der Notfallniedriggangschaltstufe in dem automatischen Schaltmodus herabschaltet.

18. Schaltsteuerverfahren gemäß einem der Ansprüche 12 bis 16, wobei
ein automatischer Schaltmodus, in dem eine aus der Vielzahl an Gangschaltstufen automatisch auf der Grundlage eines momentanen Zustandes des Fahrzeuges gemäß einer zuvor gespeicherten Schaltzuordnung gewählt wird, und ein manueller Schaltmodus, bei dem eine aus der Vielzahl der Gangschaltstufen durch einen manuellen Schaltvorgang eines Bedieners des Fahrzeuges gewählt wird, eingestellt werden, und
das Getriebe (16) so gesteuert wird, dass es zu der Notfallniedriggangschaltstufe in dem manuellen Schaltmodus im Ansprechen auf eine Betätigung eines Schalters zum Befehlen eines manuellen Schaltens herabgeschaltet wird.

19. Schaltsteuerverfahren gemäß einem der Ansprüche 12 bis 16, wobei
ein automatischer Schaltmodus, bei dem eine aus der Vielzahl an Gangschaltstufen automatisch auf der Grundlage eines momentanen Zustandes des Fahrzeugs gemäß einer zuvor gespeicherten Schaltzuordnung gewählt wird, und ein manueller Schaltmodus, bei dem eine aus der Vielzahl an Gangschaltstufen durch einen manuellen Schaltvorgang Bedieners des Fahrzeuges gewählt wird, eingestellt werden, und
das Getriebe (16) so gesteuert wird, dass es automatisch zu der Notfallniedriggangschaltstufe in dem manuellen Schaltmodus herabschaltet.

20. Schaltsteuerverfahren gemäß einem der Ansprüche 12 bis 19, wobei das Getriebe (16) ein manuell geschaltetes Getriebe der parallelen biaxialen ständig im Zahneingriff stehenden Art aufweist.

21. Schaltsteuerverfahren gemäß Anspruch 20, wobei ein Paar an Zahnrädern (90, 92) von Notfallniedriggangschaltzahnrädern in einem normalen Zustand außer Eingriff stehen, und die Notfallniedriggangschaltstufe (Gu) verwirklicht wird, indem das Paar an Zahnrädern in einen Eingriff mit dem Notfallniedriggangschaltzahnrad gebracht wird.

22. Schaltsteuerverfahren gemäß einem der Ansprüche 12 bis 21, wobei
das Getriebe ein Automatikgetriebe mit einer Vielzahl an Planetengetriebesätzen, ein kontinuierlich variables Getriebe mit einem manuellen Schaltmodus oder ein kontinuierlich variables Getriebe mit einem Nebengetriebe aufweist.

## Revendications

1. Appareil de commande de changement de vitesse d'une transmission (16) pour un véhicule incluant une pluralité d'étages d'engrenages pour une transmission automatique et un étage d'engrenages bas d'urgence (Gu) établi de manière adjacente à un étage d'engrenages le plus bas (G₁) de la pluralité d'étages d'engrenages, l'étage d'engrenages bas d'urgence ayant un rapport d'engrenage plus grand que celui de l'étage d'engrenages le plus bas; l'appareil de commande de changement de vitesse comprenant :
un moyen de détermination d'insuffisance de puissance (82) qui détermine si le véhicule est dans un état d'insuffisance de puissance nécessitant une force d'entraînement supérieure à une force d'entraînement prédéterminée obtenue à l'établissement de l'étage d'engrenages le plus bas sur la base d'un paramètre prédéterminé qui indique un état du véhicule en marche ; et
un moyen de commande de changement de vitesse (80) qui commande la transmission (16) pour une rétrogradation automatique à l'étage d'engrenages bas d'urgence lorsque le moyen de détermination d'insuffisance de puissance (82) détermine que le véhicule est dans l'état d'insuffisance de puissance.

2. Appareil de commande de changement de vitesse selon la revendication 1, dans lequel le paramètre comprend une relation d'une vitesse du véhicule par rapport à l'une d'une ouverture du papillon des gaz, d'une ouverture de l'accélérateur, d'une quantité d'air d'admission, d'une pression négative d'un tuyau d'admission, et d'une quantité d'injection de carburant.

3. Appareil de commande de changement de vitesse selon la revendication 1 ou 2, dans lequel le moyen de détermination d'insuffisance de puissance détermine que le véhicule est dans l'état d'insuffisance de puissance lorsqu'une pente ascendante effective d'une route sur laquelle le véhicule roule devient plus grande qu'une pente ascendante prédéterminée de la route sur laquelle le véhicule est capable de rouler à l'étage d'engrenages le plus bas.

4. Appareil de commande de changement de vitesse selon la revendication 1, dans lequel
le véhicule inclut au moins un embrayage automatique (14) disposé sur un chemin de transmission de puissance entre un moteur et la transmission (16); et
le moyen de détermination d'insuffisance de puissance (82) détermine que le véhicule est dans l'état d'insuffisance de puissance lorsque le véhicule est dans l'un d'un état à l'arrêt et d'un état sensiblement arrêté, et une quantité de glissement de l'embrayage automatique (14) devient supérieure ou égale à une valeur prédéterminée.

5. Appareil de commande de changement de vitesse selon la revendication 4, dans lequel le au moins un embrayage automatique (14) comprend l'un d'un embrayage de type à sec, d'un embrayage multidisque de type humide, d'un embrayage de type électromagnétique, et d'un embrayage à particules magnétiques de type électromagnétique.

6. Appareil de commande de changement de vitesse selon l'une quelconque des revendications 1 à 5, dans lequel
un mode de changement de vitesse automatique dans lequel l'un de la pluralité d'étages d'engrenages est automatiquement sélectionné sur la base d'un état effectif du véhicule conformément à une carte de changement de vitesse précédemment stockée, et un mode de changement de vitesse manuel dans lequel l'un de la pluralité d'étages d'engrenages est sélectionné par une opération de changement de vitesse manuelle d'un opérateur du véhicule sont établis, et
le moyen de commande de changement de vitesse (80) commande la transmission (16) pour une rétrogradation automatique à l'étage d'engrenages de basse vitesse d'urgence dans le mode de changement de vitesse automatique.

7. Appareil de commande de changement de vitesse selon l'une quelconque des revendications 1 à 5, dans lequel
un mode de changement de vitesse automatique dans lequel l'un de la pluralité d'étages d'engrenages est automatiquement sélectionné sur la base d'un état effectif du véhicule conformément à une carte de changement de vitesse précédemment stockée, et un mode de changement de vitesse manuel dans lequel l'un de la pluralité d'étages d'engrenages est sélectionné par une opération de changement de vitesse manuelle d'un opérateur du véhicule sont établis, et
le moyen de commande de changement de vitesse (80) commande la transmission (16) pour une rétrogradation à l'étage d'engrenages de basse vitesse d'urgence dans le mode de changement de vitesse manuel en réponse à une opération d'un commutateur de commande de changement de vitesse manuel.

8. Appareil de commande de changement de vitesse selon l'une quelconque des revendications 1 à 5, dans lequel
un mode de changement de vitesse automatique dans lequel l'un de la pluralité d'étages d'engrenages est automatiquement sélectionné sur la base d'un état effectif du véhicule conformément à une carte de changement de vitesse précédemment stockée, et un mode de changement de vitesse manuel dans lequel l'un de la pluralité d'étages d'engrenages est sélectionné par une opération de changement de vitesse manuelle d'un opérateur du véhicule sont établis, et
le moyen de commande de changement de vitesse (80) commande la transmission (16) pour une rétrogradation automatique à l'étage d'engrenage de basse vitesse d'urgence dans le mode de changement de vitesse manuel.

9. Appareil de commande de changement de vitesse selon l'une quelconque des revendications 1 à 8, dans lequel la transmission (16) comprend une transmission changée manuellement du type à prise constante bi axiale parallèle.

10. Appareil de commande de changement de vitesse selon la revendication 9, comprenant en plus une paire d'engrenages (90, 92) désengagés des étages d'engrenages de basse vitesse d'urgence dans un état normal, dans lequel l'étage d'engrenages de basse vitesse d'urgence (Gu) est établi en amenant la paire d'engrenages dans un engagement avec l'étage d'engrenages de basse vitesse d'urgence.

11. Appareil de commande de changement de vitesse selon l'une quelconque des revendications 1 à 10, dans lequel la transmission comprend l'une d'une transmission automatique avec une pluralité d'ensembles d'engrenages planétaires, d'une transmission continuellement variable avec un mode de changement de vitesse manuel, et d'une transmission continuellement variable avec une sous-transmission.

12. Procédé de commande de changement de vitesse d'une transmission (16) pour un véhicule incluant une pluralité d'étages d'engrenages pour une transmission automatique et un étage d'engrenages bas d'urgence (Gu) établi de manière adjacente à un étage d'engrenages le plus bas (G₁) de la pluralité d'étages d'engrenages, l'étage d'engrenages bas d'urgence ayant un rapport d'engrenage plus grand que celui de l'étage d'engrenages le plus bas; le procédé de commande de changement de vitesse comprenant les étapes de:
déterminer si le véhicule est dans un état d'insuffisance de puissance nécessitant une force d'entraînement supérieure à une force d'entraînement prédéterminée obtenue à l'établissement de l'étage d'engrenages le plus bas sur la base d'un paramètre prédéterminé qui indique un état du véhicule en marche; et
commander la transmission (16) pour une rétrogradation automatique à l'étage d'engrenages bas d'urgence lorsqu'il est déterminé que le véhicule est dans l'état d'insuffisance de puissance.

13. Procédé de commande de changement de vitesse selon la revendication 12, dans lequel le paramètre comprend une relation d'une vitesse du véhicule par rapport à l'une d'une ouverture du papillon des gaz, d'une ouverture de l'accélérateur, d'une quantité d'air d'admission, d'une pression négative d'un tuyau d'admission, et d'une quantité d'injection de carburant.

14. Procédé de commande de changement de vitesse selon la revendication 12 ou 13, dans lequel le moyen de détermination d'insuffisance de puissance détermine que le véhicule est dans l'état d'insuffisance de puissance lorsqu'une pente ascendante effective d'une route sur laquelle le véhicule roule devient plus grande qu'une pente ascendante prédéterminée de la route sur laquelle le véhicule est capable de rouler à l'étage d'engrenages le plus bas.

15. Procédé de commande de changement de vitesse selon la revendication 12, dans lequel
le véhicule inclut au moins un embrayage automatique (14) disposé sur un chemin de transmission de puissance entre un moteur et la transmission (16); et
il est déterminé que le véhicule est dans l'état d'insuffisance de puissance lorsque le véhicule est dans l'un d'un état à l'arrêt et d'un état sensiblement arrêté, et une quantité de glissement de l'embrayage automatique (14) devient supérieure ou égale à une valeur prédéterminée.

16. Procédé de commande de changement de vitesse selon la revendication 15, dans lequel le au moins un embrayage automatique (14) comprend l'un d'un embrayage de type à sec, d'un embrayage multidisque de type humide, d'un embrayage de type électromagnétique, et d'un embrayage à particules magnétiques de type électromagnétique.

17. Procédé de commande de changement de vitesse selon l'une quelconque des revendications 12 à 16, dans lequel
un mode de changement de vitesse automatique dans lequel l'un de la pluralité d'étages d'engrenages est automatiquement sélectionné sur la base d'un état effectif du véhicule conformément à une carte de changement de vitesse précédemment stockée, et un mode de changement de vitesse manuel dans lequel l'un de la pluralité d'étages d'engrenages est sélectionné par une opération de changement de vitesse manuelle d'un opérateur du véhicule sont établis, et
la transmission (16) est commandée pour une rétrogradation automatique à l'étage d'engrenages de basse vitesse d'urgence dans le mode de changement de vitesse automatique.

18. Procédé de commande de changement de vitesse selon l'une quelconque des revendications 12 à 16, dans lequel
un mode de changement de vitesse automatique dans lequel l'un de la pluralité d'étages d'engrenages est automatiquement sélectionné sur la base d'un état effectif du véhicule conformément à une carte de changement de vitesse précédemment stockée, et un mode de changement de vitesse manuel dans lequel l'un de la pluralité d'étages d'engrenages est sélectionné par une opération de changement de vitesse manuelle d'un opérateur du véhicule sont établis, et
la transmission (16) est commandée pour une rétrogradation à l'étage d'engrenage de basse vitesse d'urgence dans le mode de changement de vitesse manuel en réponse à une opération d'un commutateur de commande de changement de vitesse manuel.

19. Procédé de commande de changement de vitesse selon l'une quelconque des revendications 12 à 16, dans lequel
un mode de changement de vitesse automatique dans lequel l'un de la pluralité d'étages d'engrenages est automatiquement sélectionné sur la base d'un état effectif du véhicule conformément à une carte de changement de vitesse précédemment stockée, et un mode de changement de vitesse manuel dans lequel l'un de la pluralité d'étages d'engrenages est sélectionné par une opération de changement de vitesse manuelle d'un opérateur du véhicule sont établis, et
la transmission (16) est commandée pour une rétrogradation automatique à l'étage d'engrenage de basse vitesse d'urgence dans le mode de changement de vitesse manuel.

20. Procédé de commande de changement de vitesse selon l'une quelconque des revendications 12 à 19, dans lequel la transmission (16) comprend une transmission changée manuellement du type à prise constante bi axiale parallèle.

21. Procédé de commande de changement de vitesse selon la revendication 20, dans lequel une paire d'engrenages (90, 92) sont désengagés des étages d'engrenages de basse vitesse d'urgence dans un état normal, et l'étage d'engrenages de basse vitesse d'urgence (Gu) est établit en amenant la paire d'engrenages en engagement avec l'étage d'engrenages de basse vitesse d'urgence.

22. Procédé de commande de changement de vitesse selon l'une quelconque des revendications 12 à 21, dans lequel la transmission inclut l'une d'une transmission automatique avec une pluralité d'ensembles d'engrenages planétaires, d'une transmission continuellement variable avec un mode de changement de vitesse manuel et s'une transmission continuellement variable avec une sous-transmission.
